**Europäisches Patentamt**

(19) **European Patent Office**

**Office européen des brevets**

(11) Publication number: **0 226 060**
**B1**

(12) EUROPEAN PATENT SPECIFICATION

(45) Date of publication of the patent specification:
31.01.90

(21) Application number: **86116035.6**

(22) Date of filing: **20.11.86**

(51) Int. Cl.⁴: **B60P 1/64**

(54) Equipment for transport and handling of containers and other larger load carriers.

(30) Priority: **13.12.85 SE 8505906**

(43) Date of publication of application:
**24.06.87 Bulletin 87/26**

(45) Publication of the grant of the patent:
**31.01.90 Bulletin 90/5**

(84) Designated Contracting States:
**AT BE CH DE ES FR GB GR IT LI LU NL SE**

(56) References cited:
**DE-A- 2 119 420**
**DE-U- 1 954 743**
**US-A- 3 057 499**
**US-A- 4 243 353**

(73) Proprietor: **Rippelton N.V., de**
**Ruyterkade 62 Postbus 812, Curaçao Netherlands**
**Antilles(AN)**

(72) Inventor: **Brunér, Hasse, Rackekärr, S-544 00 Hjo(SE)**
Inventor: **Persson, Lars-Inge, Nygardsvägen 35,**
**S-263 00 Högenäs(SE)**

(74) Representative: **Hynell, Magnus, Hynell Patenttjänst AB**
**Box 236, S-683 02 Hagfors(SE)**

## Description

### TECHNICAL FIELD

The invention concerns equipment for transport and handling of containers and other larger load carriers which, together with a load carrying frame, forms a load unit designed so as to be able to be placed on a load changer on a first vehicle which is fitted with devices for manoeuvring of the load unit when this is to be placed on or unloaded from the load changer, with this load carrying frame being fitted with an upward-pointing stand (pillar) at the front end with coupling mechanism for coupling of the said manoeuvring devices with the stand.

### BACKGROUND ART

Whole crop harvesting is a new and old method for gathering in all valuable components of harvest crops, i.e. not only seed corn but also straw, blades and husks. In its modern form this technique entails the whole plant except the root system and a short stubble being cut directly on the field by the harvesting machine. The cut produce is collected in a container which is carried by the harvesting machine. When the container is full it is transported to a centre, after which the cut produce is separated into different components or treated in another way. So that the new technique's advantages may be able to be utilised in an effective manner it is essential that all steps in the handling system can be carried out in a rational way. This entails among other things that all forms of transport must be able to be carried out rationally and that load transfer must be able to be avoided as far as possible. The latter condition has not been able to be solved in a satisfactory way with the aid of known technology.

### BRIEF DISCLOSURE OF THE INVENTION

An aim of the invention is to offer equipment which solves the abovementioned problems connected with whole crop harvesting better than known equipment, wether it is a question of grain crops or other crops. The application of the invention is not, however, limited to this sphere, but can with advantage be used also in many other fields where there is a requirement to change between carried and towed transportation. Examples of such requirements are to be found in forestry, peat handling, manufacturing, industry and many other fields.

According to the invention the load unit can be converted to a trailer which can be coupled directly to a tractor or other towing vehicle for transport of the load carrier between a loading place, for example a harvest field, and an emptying place, for example a receiving centre or similar. This conversion capability can be achieved through the fact that the load carrying frame is longer than the load changer, so that the load carrying frame projects with a part at the rear end beyond the rear end of the load changer, that the aforesaid rear end part on the load carrying frame is fitted with at least one pair of wheels, and through the fact that the aforesaid stand at the front end of the load unit can be swung down, when the load unit is unloaded, through rotation of a horizontal member, so that the dropped column can serve as a drawbar when the load unit is converted into a trailer.

Preferably the stand has an L-shaped profile, while the aforesaid member forming a coupling between the end of the short shank of the L and the front end of the main part of the load carrying frame. Further it is advisable to have one or more ground supports fitted to the upper part of the stand, more closely on the side which, in relation to the L shape, is turned leftwards from the vertical shank of the L. These ground supports function when the load unit is converted to a trailer and the towing vehicle is uncoupled. The ground supports can have the form of feet or wheels.

The power sources for converting the load unit to a trailer and vice versa comprise a pair of hydraulic cylinders which are fitted on the load unit in order to produce the rotational movements around the horizontal axis of rotation of the aforesaid member.

Further characteristics and advantages of the invention will become clear from the patent claims and from the following description of a preferred embodiment.

### BRIEF DESCRIPTION OF DRAWINGS

In the following description of a preferred embodiment reference will be made to the enclosed drawings, of which

Fig. 1 is a side view of a vehicle, called the first vehicle, which is fitted in a manner which is in itself known with a load changer and so called projection for manoeuvring of a load unit,

Fig. 2 shows the same vehicle as in Fig. 1 fitted with a header and a load unit with the container belonging to it placed on the load changer,

Fig. 3 is a side view of the load unit on a larger scale,

Fig. 4 is an end view IV-IV in Fig. 3, and

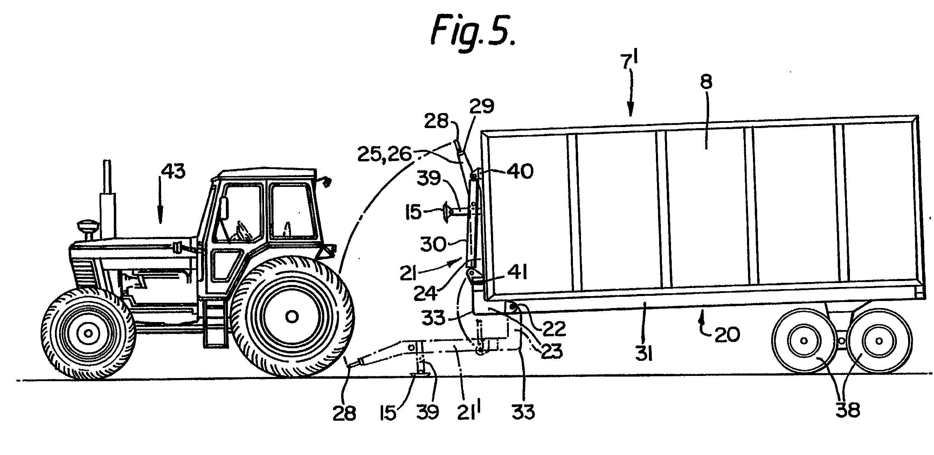

Fig. 5 is a side view, which shows how the load unit converted to a trailer can be coupled to a tractor.

### DESCRIPTION OF PREFERRED EMBODIMENT

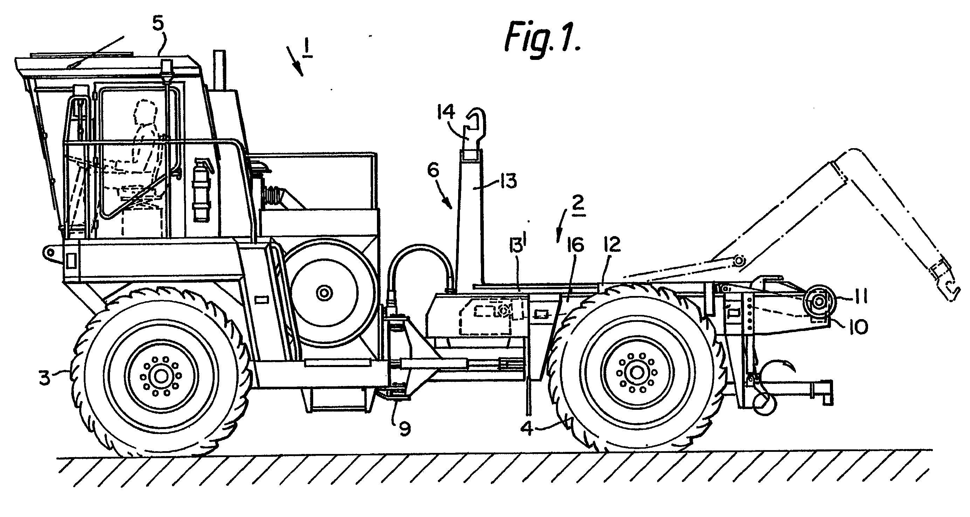

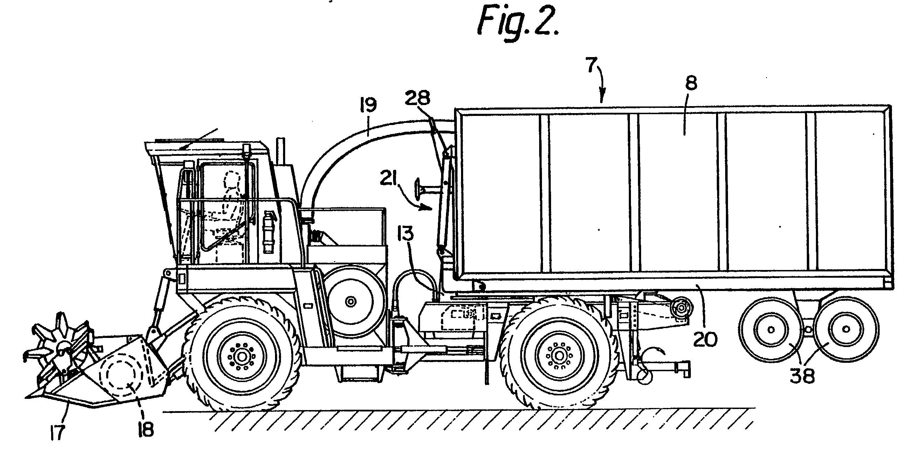

In Figs. 1 and 2 a first vehicle is designated with the numeral 1. This consists of a front part with driver's cab 5 and a rear part with load changer 2. Between the two parts there is an articulated frame steering hinge 9. The front part has a pair of front wheels 3, and the rear part has a pair of rear wheels 4. The basic construction of the vehicle 1 is known in the art and does not constitute any part of the invention. Its rear end has been designated 10.

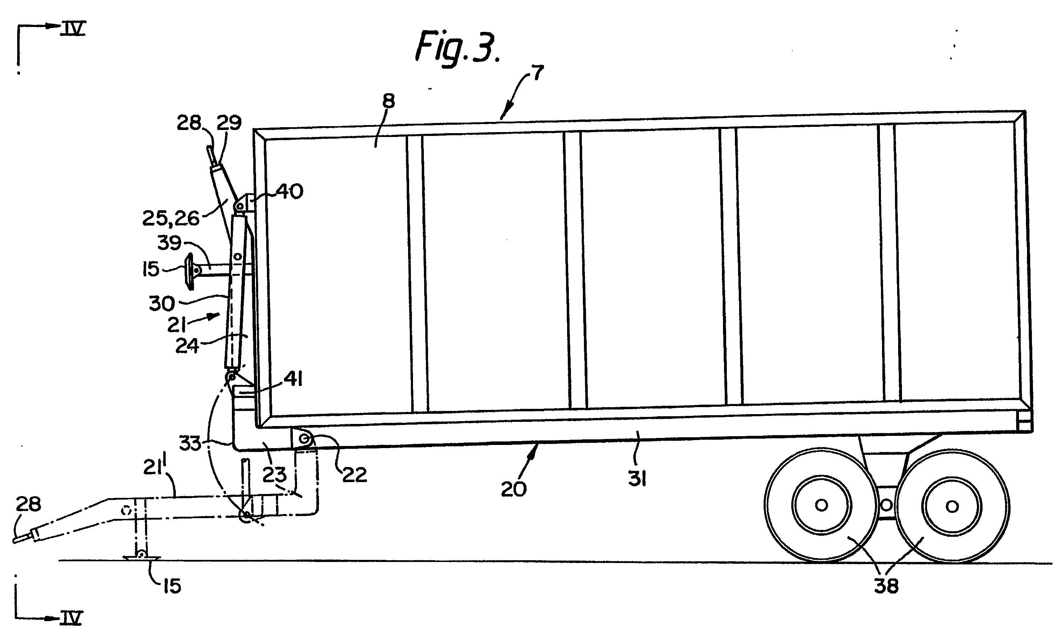

At the rear end 10 of the load changer 2 there are "roll-on roll-off" rollers 11, in a way that is in itself well known, for unloading and loading of a load unit 7, Fig. 2 and Fig. 3, consisting of a container 8 and a load carrying frame 20. The container 8 and the load carrying frame are attached to each other by welding,

On the load changer 2 there is also a projection 6 for manoeuvring of the load unit 7 in connection with unloading and loading. The projection 6 consists, in a well known manner, of an angled beam construction with a straight first part 12, which is horizontal in the rest position, and another angled part which includes a vertical pillar 13, which is terminated in a hook 14, and a horizontal part 13', which is telescopically movable in the first part 12. The first part 12 is connected at its rear end to the load changer 2 through a horizontal manoeuvre arm shaft. In the load changer 2 two parallel first hydraulic cylinders 16 are fitted, one on each side of the first part of the beam 12, in order to be able to swing the projection 6 through rotation about the said shaft in order to drop the projection 6 backwards to the position marked with a dotted line in Fig. 1. In addition there are other hydraulic cylinders - not shown - in order to project the vertical pillar 13 forwards and backwards in relation to the load changer, with the horizontal part 13' moving telescopically in the first named part 12 in connection with unloading and loading of the load unit 7.

In Fig. 2 it is shown how the vehicle 1 functions as a combined implement carrier and load carrier. The front part has been fitted with a header 17 and a chopper 18. The chopped harvest crop is transported with the aid of a blower and a duct 19 to the container 8. The vehicle 1 also contains a hydraulic motor to operate the system's various hydraulic components.

The above described construction belongs to well known technology. The new element resides in the design of the load unit 7. The load unit 7 comprises on the one hand the abovementioned load carrying frame 20, which is fixed by welding to the container 8, and on the other hand a stand (pillar) 21, which is shaped like an L, whose right-hand arm at its right-hand end is pivotally connected to the front end of the load carrying frame 20 by a horizontal hinge 22.

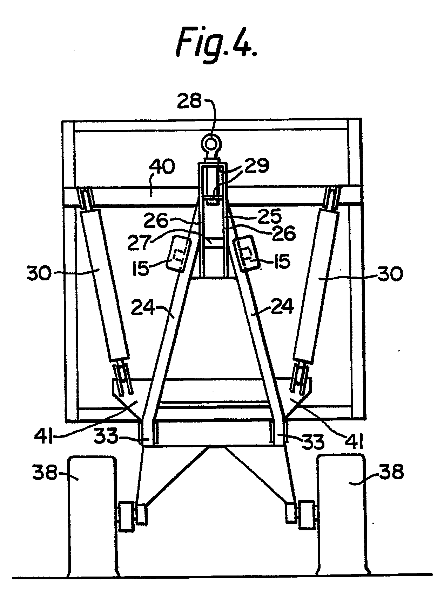

The rear main section of the load changer frame 20 consists in the well known manner of longitudinal parallel side beams and crossbeams welded together into a framework 31, which in its turn is fixed by welding to the container 8. The stand 21 includes a pair of beams, which have, as has already been mentioned, from the side the shape of an L. The two shorter, parallell arms, which at their outer ends are pivotally connected to the framework 31 by the pivot 22 (turning axis), have been designated 23 and the two longer arms have been designated 24, Fig. 4. The knee bend in the angle between the two arms 23 and 24 of the L has been designated 33. The two longer arms 24 approach each other at the outer ends, where they are joined together by a welded plate construction 25 containing a pair of side plates 26. Between these two side plates 26 there extends a link 27 arranged to work in conjunction with the hook 14 on the projection 6. In addition there is an eye 28 attached to an end plate 29 on the plate construction 25. The two longer arms 24 both also feature on the outside a pair of supporting feet 15 with legs 39, which are pivotally connected with the two shanks 24.

The load unit 7 is substantially longer than the load changer 2. In the rear part of the load unit, which projects beyond the rear edge 10 of the load changer 2 when the load unit 7 is mounted on the load changer 2, there are two pairs of bogie wheels 38, which hang free in the air when the load unit 7 with the container 8 is loaded on the vehicle 1.

The equipment described can be handled in the following manner. Suppose that the load unit 7 with the container 8 is loaded on the load changer 2, and that the container 8 has been filled with harvest produce and is to be transported to a receiving centre. The load unit 7 with the container is unloaded from the load changer 2 with the aid of the projection on 6 and the hydraulic cylinders belonging to it in the well known manner. The unloaded unit is thus standing inclined forwards with the back pair of bogie wheels 38 and the knee bend 33 resting on the ground. With the aid of a pair of double-acting hydraulic cylinders 30 fitted between a horizontal beam 40 on the container's front end and a pair of fastening lugs 41 on the outside of the arms 24 a bit above the knee bend 33 the stand 21 swings forwards and downwards through rotation about the turning axis 22. The knee bend 33 is then pressed harder against the ground after the arms 23 and 24 are pressed forwards and downwards, so that the load unit rises upwards at the same time as the pair of bogie wheels 38 rolls slightly forwards. The ground supports 15 soon come to reach the ground. Through continued rotation about the axis 22 the hydraulic cylinder 30 continues to project the stand 21 away from itself and press the feet 15 against the ground, so that the knee bends 33 leave the ground until the load carrying frame 20 has assumed a substantially horizontal position. The load changer frame 20 has now been converted into a truck 7' or trailer consisting of a container 8 on the framework 31 which forms the chassis of the truck 7'. At the rear there are the wheels 38 and at the front a drawbar 21', formed by the swung-down pillar 21. The truck 7' can be coupled to a tractor 43 by means of the eye 28 at the end of the drawbar 21'. The unit can then be moved to the receiving centre or similar, where the container is emptied. The tractor 43 with the truck 7' can then be driven back, the truck 7' is uncoupled and converted to a load unit 7 through return of the drawbar 21' so that instead it forms a stand (pillar) 21 with attachment 27 for the hook 14 on the projection 6 etc.

**Claims**

1. Equipment for transport and handling of containers (8) and other larger load carriers which, together with a load carrying frame (20), forms a load unit (7) arranged so as to be able to be placed on a load changer (2) on a first vehicle (1), which is fitted with a device (6) for manoeuvring of the load unit (7) when this is to be placed on or unloaded from the load changer, with this load carrying frame being fitted with an upward-pointing stand (pillar) (21) at the front end with a coupling device (27) for coupling together of the aforementioned manoeuvring device (6) and the stand, **characterised** by the fact that the load carrying frame (20) is longer than the load changer (2), so that the load carrying frame projects with a rear end part beyond the rear end (10) of the load changer, that the aforesaid rear end part of the load carrying frame is fitted with at least one pair of wheels (38), and that the aforesaid stand (21), when the load unit is unloaded, can be swung down through rotation about a horizontal axis (22) for converting the load unit (7) into a trailer (7'), with the swung-down stand being able to act as a drawbar (21') on the trailer (7').

2. Equipment as per claim 1, **characterised** by the fact that the stand has an L-shaped side profile, with the aforementioned pivot (22) forming a coupling between the end of the short arm (23) of said L and the front end of the main part (31) of the load carrying frame (20).

3. Equipment as per claim 2, **characterised** by the fact that at least one ground support (15, 38) is fitted on the upper part (24) of the stand (21), and the ground support is arranged to be pressed against the ground when the load unit is converted to a trailer (7').

4. Equipment as per any of the claims 1-3, **characterised** by the fact that a pair of hydraulic cylinders (30) is fitted so as to rotate the stand (21) in relation to the load carrying frame (20) about the aforesaid axis (22) and in the final phase of this movement of rotation to press the ground supports against the ground in order to raise up thereby the front part of the load unit (7) converted into a trailer (7').

5. Equipment as per claim 4, **characterised** by the fact that the load carrier (8) is integrated and that the said hydraulic cylinders (30) are fitted between the stand (21) and the load carrier (8).

## Patentansprüche

1. Einrichtung zum Transportieren und Handhaben von Behältern (8) und anderen größeren Lastentransportmitteln, welche zusammen mit einem Lastenstützrahmen (20) eine Lasteneinheit (7) bilden, welche so angeordnet ist, daß sie zum Aufsetzen auf einen Lastenwechsler (2) auf einem ersten Fahrzeug (1) eingerichtet ist, welches mit einer Manövriereinrichtung (6) für die Lasteneinheit (7) in Verbindung bringbar ist, wenn diese auf den Lastenwechsler auf- bzw. von diesem abgeladen werden soll, indem der Lastenstützrahmen mit einem aufrechtstehenden Pfosten bzw. Ständer (21) am vorderen Ende mit einer Kupplungseinrichtung (27) zum Zusammenkuppeln der genannten Manövriereinrichtung (6) und des Ständers ausgerüstet ist, dadurch gekennzeichnet, daß der Lastenstützrahmen (20) länger als der Lastenwechsler (2) ausgebildet ist, so daß der Lastenstützrahmen mit einem hinteren Endteil über das hintere Ende (10) des Lastenwechslers übersteht, daß der genannte hintere Endteil des Lastenstützrahmens mit mindestens einem Räderpaar (38) in Verbindung bringbar ist und daß der genannte Ständer (21) dann, wenn die Lasteneinheit abgeladen ist, durch Rotation um eine horizontale Achse (22) zum überführen der Lasteneinheit (7) in einen Anhänger (7') herunterschwenkbar ist, so daß der heruntergeschwungene Ständer in der Lage ist, als eine Zugstange (21') am Anhänger (7') zu dienen.

2. Einrichtung nach Anspruch 1, dadurch gekennzeichnet, daß der Ständer im Seitenprofil eine L-Form aufweist und daß die genannte Achse (22) bzw. das entsprechende Gelenk eine Kupplung zwischen dem Ende des kurzen Arms (23) des L und dem vorderen Ende des Hauptteils (31) des Lastenstützrahmens (20) bildet.

3. Einrichtung nach Anspruch 2, dadurch gekennzeichnet, daß mindestens ein Bodengestell bzw. eine Bodenstütze (15, 38) am oberen Teil (24) des Ständers (21) angebracht ist und daß die Bodenstütze so angeordnet ist, daß sie gegen den Boden preßt, wenn die Lasteneinheit in einen Anhänger (7') umgewandelt ist.

4. Einrichtung nach einem der Ansprüche 1–3, dadurch gekennzeichnet, daß ein Paar Hydraulikzylinder (30) derart angebracht ist, daß der Ständer (21) in bezug zu dem Lastenstützrahmen (20) um die genannte Achse (22) rotiert, um in der Endphase dieser Rotationsbewegung die Bodenstütze auf den Boden zu pressen und hierdurch den Vorderteil der Lasteneinheit (7), die in einen Anhänger (7') umgewandelt ist, anzuheben.

5. Einrichtung nach Anspruch 4, dadurch gekennzeichnet, daß der Lastenträger (8) integriert ist und daß die Hydraulikzylinder (30) zwischen den Ständer (21) und den Lastenträger (8) eingepaßt sind.

## Revendications

1. Equipement pour le transport et la manipulation de conteneurs (8) et autres assez grands porteurs de charge qui, avec un châssis portant la charge (20) forme une unité de charge (7) agencée de manière à pouvoir être placée sur un changeur de charge (2) sur un premier véhicule (1), qui est pourvu d'un dispositif (6) pour manœuvrer l'unité de charge (7) lorsque celle-ci doit être placée sur ou déchargée du changeur de charge, ce châssis portant la charge étant pourvu d'un montant (pilier) dirigé vers le haut (21) à l'extrémité avant avec un dispositif d'accouplement (27) pour coupler ensemble le dispositif de manœuvre (6) ci-dessus mentionné et le montant, caractérisé en ce que le châssis portant la charge (20) est plus long que le changeur de charge (2), donc le châssis portant la charge dépasse, par sa partie extrême arrière, au delà de l'extrémité arrière (10) du changeur de charge, en ce que la partie extrême arrière ci-dessus du châssis portant la charge est pourvue d'au moins une paire de roues (38) et en ce que le montant (21) ci-dessus, lorsque l'unité de charge est déchargée, peut être pivoté vers le bas par rotation autour d'un axe horizontal (22) pour convertir l'unité de charge (7) en une remorque (7') avec le montant pivoté vers le bas pouvant servir de barre d'attelage (21') sur la remorque (7').

2. Equipement selon la revendication 1, caractérisé par le fait que le montant a un profilé de; côté en forme de L, avec le pivot (22) ci-dessus mentionné formant un accouplement entre l'extrémité du bras; court (23) dudit L et l'extrémité avant de la partie principale (31) du châssis (20) portant la charge.

3. Equipement selon la revendication 2, caractérisé par le fait qu'au moins un support au sol (15, 38) est fixé à la partie supérieure (24) du montant (21) et le support au sol est agencé pour être pressé contre le sol quand l'unité de charge est convertie en une remorque (7').

4. Equipement selon l'une des revendications 1–3, caractérisé par le fait qu'une paire de cylindres hydrauliques (30) est fixée de façon à faire tourner le montant (21) relativement au châssis portant la charge (20) autour de l'axe (22) ci-dessus et, dans la phase finale de ce mouvement de rotation, à presser les supports au sol contre le sol afin d'élever ainsi la partie avant de l'unité de charge (7) convertie en une remorque (7').

5. Equipement selon la revendication 4, caractérisé par le fait que le porteur de charge (8) est intégré et que lesdits cylindres hydrauliques (30) sont fixés entre le montant (21) et le porteur ce charge (8).

Fig.1.

# Fig.2.

EP 0 226 060 B1

Fig.3.

# Fig.4.

Fig.5.